# EUROPEAN PATENT APPLICATION

(11) **EP 2 833 575 A1**
(43) Date of publication of application: **04.02.2015**
(21) Application number: 14179523.7
(22) Date of filing: 01.08.2014
(51) Int. Cl.: H04L 12/26, H04N 21/2543, H04N 21/24

(54) **Methods and systems for video quota management**

(30) Priority: 02.08.2013 US 201361861895 P; 31.03.2014 US 201414230944
(71) Applicant: Avvasi, Inc., Waterloo, Ontario N2V 1C5 (CA)
(72) Inventor: Gallant, Michael, Kitchener Ontario NP2 2L2 (CA); Archer, Michael, Cambridge Ontario N3H 3J9 (CA)
(74) Representative: Benson, Christopher

(57) **Abstract**

A method of providing streaming media content to a subscriber mobile device includes providing a time-denominated media quota associated with the subscriber mobile device; in response to a request for the streaming media content from the subscriber mobile device, providing the streaming media content to the subscriber mobile device through a mobile data network; determining a media duration associated with the streaming media content; and applying the media duration associated with the streaming media content to the time-denominated media quota.

## Description

### FIELD OF THE DISCLOSURE

This disclosure, in general, relates to methods and systems for managing quotas associated with video content provided over a network.

### BACKGROUND

Streaming multimedia content from various multimedia sources over various computer networks is becoming increasingly popular. Streaming has become an important element of the "Internet" experience through media providers such as YouTube™, Netflix™ and many others. With growing demands for streaming multimedia content, data networks are utilizing an increasingly large amount of bandwidth. In particular, video represented over 50% of mobile traffic in 2012, and was growing at over 50% per year.

Multimedia services geared towards real-time entertainment contribute significantly to the amount of traffic on many networks and impose a significant load for the organizations that provide those networks and distribute the media content. Unlike voice minutes and text messages, understanding data usage is not simple. The number of megabytes associated with an email, web page load or image upload/download is already difficult for consumers to quantify and track. Media is even more problematic as, generally, it generates a significant amount of data and, more specifically, the amount can vary widely depending on encoding parameters such as codec, sampling parameters (channels, resolution, etc.), quality level, etc., many of which are beyond the control or understanding of the consumer as well as the network operator. Moreover, ever-increasing device processing and display capabilities is driving content to higher quality levels, resolutions and bitrates, increasing the per-media-session demand for network resources.

### SUMMARY

According to aspects of the present invention there is provided a method and apparatus as set forth in the appended claims.

In a first aspect, a method of providing streaming media content to a subscriber mobile device includes providing a time-denominated media quota associated with the subscriber mobile device; in response to a request for the streaming media content from the subscriber mobile device, providing the streaming media content to the subscriber mobile device through a mobile data network; determining a media duration associated with the streaming media content; and applying the media duration associated with the streaming media content to the time-denominated media quota.

In a second aspect, a system for managing delivery of streaming media includes a credit control client to receive a request for media content from a subscriber mobile device and to deliver the media content to the subscriber mobile device based on an availability of media time associated with a time-denominated quota. The system further includes a subscriber database in communication with the credit control client and to provide data to the credit control client associating a subscriber account with the subscriber mobile device. The system also includes a credit control server in communication with the credit control client and the subscriber database, the credit control server to communicate the availability of media time based on the time-denominated quota associated with the subscriber account associated with the subscriber mobile device and to apply a media duration associated with the delivered media content to the time-denominated quota. The method may further comprise applying the media duration to the time-denominated quota. Determining the availability of media time may include communicating with a credit control server, the credit control server managing the time-denominated quota. Communicating with the credit control server may include requesting an apportionment of media time. Requesting the apportionment of media time may be based on an expected length of the media content stream. The method may further comprise transcoding the media content stream to a lower quality media content stream prior to providing the lower quality media content stream to the subscriber mobile device; and prompting a user at the subscriber mobile device to accept the lower quality media content stream in exchange for additional time-denominated quota.

In a third aspect, a method for managing streaming media includes receiving a media request for media content from a subscriber mobile device via a mobile data network; determining an availability of media time relative to a time-denominated quota associated with the subscriber mobile device; providing a media content stream to the subscriber mobile device based on the availability of the media time; and determining a media duration associated with the media content stream provided to the subscriber mobile device.

In a fourth aspect, a method of managing streaming media usage includes allotting a time-denominated media quota to a mobile subscriber account; receiving a request for media time associated with a subscriber mobile device associated with the mobile subscriber account; and approving the request based upon the availability of media time relative to the time-denominated media quota.

### BRIEF DESCRIPTION OF THE DRAWINGS

The present disclosure may be better understood, and its numerous features and advantages made apparent to those skilled in the art by referencing the accompanying drawings.
FIG. 1 includes a flow diagram illustrating an exemplary method for quota management.
FIG. 2 includes a block diagram of a media service gateway within a network system.
FIG. 3A illustrates an example implementation of a mobile data network.
FIG. 3B illustrates another example implementation of a mobile data network.
FIG. 4 includes a block diagram illustrating an exemplary quota management system.
FIG. 5 includes a diagram of exemplary communications within an exemplary quota management system.
FIG. 6 includes a block diagram illustrating an exemplary gateway.

The use of the same reference symbols in different drawings indicates similar or identical items.

### DETAILED DESCRIPTION

In an exemplary embodiment, network operators can offer media as a service. Exemplary media includes streaming media, such as streaming audio or video media content. In particular, the media-as-a-service can be offered separate from voice, texting, and optionally other non-media data. Network operators can deliver the media as a time-denominated service, for example, of an agreed number of video or audio minutes, in contrast to traditional measurement of data traffic based on volume (bytes). As such, a system is described that provides real-time, time-denominated charging of media traffic by network operators, including measuring and reporting on consumed media traffic in units of time, media specific credit requests, responses, and updates in units of time, and managing a media traffic quota in units of time. Optionally, other non-media data services can be supplied based on a separate quota expressed in volume amounts, such as bytes. Such a media-as-a-service service can be provided as a periodic service, such as a monthly contract, or can be provided as a pay-per-use or prepaid service.

In the context of a paid for service, a time-denominated quota can be associated with an explicit or implicit service-level agreement between the network operator and subscribers based around quality levels or metrics associated with the delivered media. In addition to measuring and managing media traffic in units of time, network operators can measure and control the quality of media traffic. The present system allows network operators to create, measure against, and deliver to media-specific service-level agreements, with media quality as a metric, for example, by measuring and managing media traffic based on audio encoding format, number of audio channels, audio sampling rates, or audio bit rate; video encoding format, video resolution, video frame rate, or video bit rate; total bit rate; startup delays or frequency, location and duration of stalling events; or other quality metrics.

In addition, the present system can provide for enhanced control of time-denominated quota usage. For example, application of usage (e.g., media duration) to a time-denominated quota can be adjusted based on quality levels or metrics associated with the delivered media content. In particular, drawdown of the time-denominated quota can be adjusted based on quality levels or metrics of delivered media content relative to a contracted service-level agreed upon between the network operator and the subscriber. For example, the time-denominated quota can be drawn down slower or fewer minutes of quota can be deducted when lower quality media content (e.g., lower resolution such as SD, lower bit rate, etc.) is delivered.

In an example, a user or subscriber can be prompted with an offer of additional quota or slower drawdown of quota limits in exchange for accepting lower quality of the delivered media content. Alternatively, application of media duration to a time-denominated quota can be accelerated or increased when higher-quality media content is delivered.

Media duration can include the network or streaming time for the transfer of media data, optionally modified by an expected versus a measured rate of transfer of media data the application or playback time of the media content received at a media service gateway or client device (e.g., subscriber mobile device), the application or playback duration of the media content experienced by a user of the client device (e.g. based on a viewing model), or any combination thereof, whether it be audio or video content and optionally modified based on various subscriber, device, location/network state, media session, and other policies. Network or streaming time is the duration over which associated packets of data traverse the network or the duration associated with processing such packets. The application or playback time is the duration associated with experiencing the media content contained with the media data either as originally encoded or as modified.

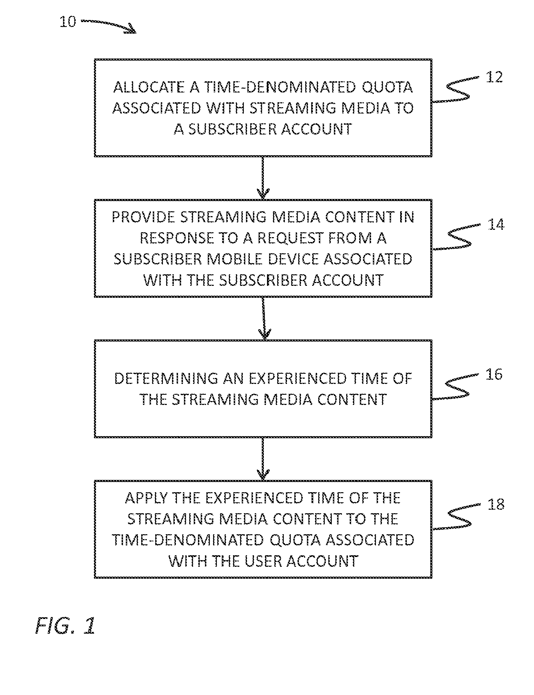

In particular, network operators can allocate the time-denominated quota for media to a subscriber, provide streaming media content in response to a request for media content from a client device (e.g., subscriber mobile device), and apply the media duration of the provided streaming media content to the time-denominated quota. For example, FIG. 1 illustrates a method 10 for managing a time-denominated quota associated with media, such as streaming media. As illustrated at 12, the time-denominated quota associated with media can be allocated to a subscriber account. In particular, the time-denominated quota can further be associated with a range of quality metrics of streaming media to be provided to the subscriber. Such quality levels or metrics can be expressed in audio encoding formats, number of audio channels, audio sampling rates, or audio bit rates; video encoding formats, video resolutions, video frame rates, or video bit rates; total media bit rate; startup delays or frequency location and duration of stalling events; or other quality metrics, e.g. presentation, delivery, or combined quality of experience metrics. The quality levels or metrics can be expressed as a minimum quality level or metric to be delivered. In another example, the quality levels or metrics can be expressed as a maximum quality playable by a client device associated with a subscriber account. In a further example, the quality levels or metrics can be expressed as a range of metrics. Media duration of lower or higher quality content can be charged against the allocated quota at different multiples.

In an example, the time-denominated quota may be allocated periodically, such as monthly in the case of a monthly service contract. In another example, the time-denominated quota can be allocated as a paid-per-use service or a prepaid service. In such an example, a user may purchase a number of minutes of streaming media at an associated quality level. In a further example, a set of subscriber devices can be associated with a subscriber account and can share a time-denominated quota, for example, in a family or friends and family plan.

As illustrated at 14, a network operator can provide streaming media content in response to a request for media content from a subscriber device associated with the subscriber account. The streaming media content can be audio or video content or a combination thereof. In an example, the subscriber device is a subscriber mobile device, such as a smartphone, tablet, or laptop, connected to the operator network. In an example, the system can differentiate between media and non-media content, retrieve the media content from a media server, optionally modify the media content, and deliver the media content to the requesting subscriber device. Non-media data traffic, such as HTML text or static images, can optionally be treated differently than media traffic.

In an example, the system can permit the request for media content from a third-party, modify higher-quality metric media content to an agreed-upon service level or for device capabilities, and transmit the requested media content to the subscriber device. Optionally, the system can change the video encoding format, video resolution, video frame rate, or video bit rate; the audio encoding format, number of audio channels, audio sampling rate or audio bit rate; the total bit rate; or other quality metrics. For example, the encoding may be adjusted or modified based on the capabilities of the requesting subscriber device. In another example, the encoding can be modified to match the quality level or metrics associated with the time-denominated quota. In a further example, the encoding can be altered based on the level of activity on the network. In a further example, quality level of the media content can be altered to a lower quality to permit completion of viewing of the media content given limitations within the time-denominated quota. For example, in the event that requested media content would utilize a greater amount of time than the remaining time within the time-denominated quota, the system can select a lower quality and modify the content to permit viewing of media content given the limited amount of time-denominated quota remaining for the subscriber account.

As illustrated at 16, the media duration of the media content can be determined. For example, when a user views or listens to the entire requested media content at the agreed-upon quality level, the media duration can be equal to that of the provided media content. Alternatively, when a user terminates viewing of the media content prior to completion of the media content, the media duration can be less than the entire time of the requested media content. As such, the media duration applied to a quota can be adjusted. In a particular example, the system can include a viewing model associated with the requesting subscriber device or the application on the requesting subscriber device. Using the viewing model, the system can model playback settings and other factors that influence the amount of media content actually viewed given the amount of the media content delivered to the requesting subscriber device. As such, the system can estimate the duration of media content actually viewed by the subscriber through the subscriber device and utilize this value when determining the media duration to apply against the time-denominated quota. While examples herein are expressed in terms of viewing, such features have applicability to listening and audio content. In an example, a viewing model can be used for audio content.

Alternatively, the subscriber device or the application running on the subscriber device can provide parameters to the system with which the system can determine an experienced time for use in determining media duration. In a further alternative example, the subscriber device or the application running on the subscriber device can provide a feedback to the system. This information may be provided "in-band" as side information within the main media request/response data stream or "out-of-band" via a separate data stream.

In a further example, the actual or estimated media duration can be modified based on the quality level or metrics of the media content provided to the subscriber device. For example, depending upon the quality level or metrics associated with the delivered media content relative to the contracted for or agreed upon quality level or metrics, the actual or estimated media duration can be adjusted using a multiplier or an additive. In a particular example, when a reduced quality level of media content is delivered to the subscriber device, the actual or estimated media duration can be multiplied by a multiplier of less than 1.0, reducing the value of the estimated media duration. In another example, in the event of a start delay or stalling delays, a fixed amount of time can be subtracted from the actual or estimated media duration, reducing the amount of time to be applied to the time-denominated quota. Alternatively, in the event that a higher-quality media content than a quality level associated with the subscriber account is delivered to the subscriber, a multiplier of greater than 1.0 can be applied to the actual or estimated media duration, resulting in a higher media duration to be applied to the time-denominated quota. Further, additional modifiers can be utilized to adjust the actual or estimated media duration based on quality of experience, delays from start or stalling, audio or video quality levels, or other factors.

In another alternative example, media duration values may also be in terms of network or streaming time, which may be a determination of the time(s) between one or more request or response packets for the media flow or flows.

The media duration can be applied to the time-denominated quota associated with the subscriber account associated with the subscriber device, as illustrated at 18. In an example, the media duration can be added to previous media durations and compared to the time-denominated quota limit. In another example, the media duration can be subtracted from the remaining time-denominated quota resulting from subtraction of previous media durations from an initial time-denominated quota value.

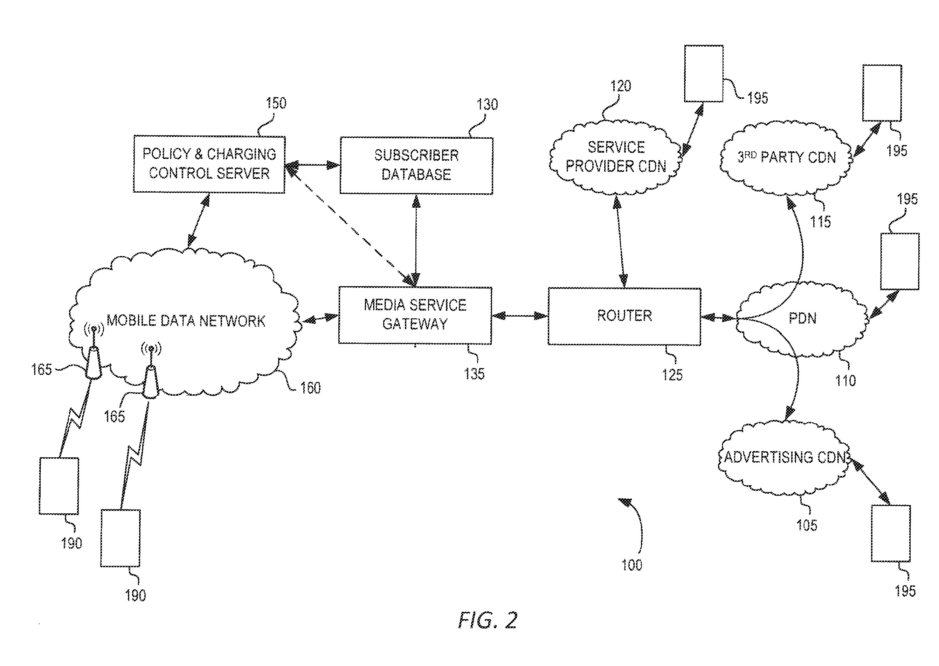

In particular, the system can be implemented as a portion of a media service delivery system, such as a media service delivery system associated with a mobile network. An exemplary media service delivery system 100 is illustrated in FIG. 2, which is presented as an example. Other architectures can be utilized to implement the quota management system. FIG. 2 illustrates a block diagram of a media service delivery system 100 that generally includes a media service gateway 135 that interfaces between one or more delivery networks and a mobile data network 160.

Advertising content delivery network (CDN) 105, primary delivery network 110, third party CDN 115, service provider CDN 120, and mobile data network 160 can include data networks capable of carrying data, such as the Internet, public switched telephone network (PSTN), or any other suitable local area network (LAN) or wide area network (WAN). In particular, mobile data network 160 can include a Universal Mobile Telecommunications System (UMTS), 3GPP Long-Term Evolution Advanced (LTE Advanced) system, Worldwide Interoperability for Microwave Access (WiMAX) system, other 3G and 4G networks, and their equivalent and successor standards. Mobile data network 160 can include a plurality of base transceiver stations 165, which are operable to communicate with individual client devices 190, such as subscriber mobile devices associated with subscriber accounts.

Networks 105, 110, 115 and 120 can include content delivery networks. In some embodiments, one or more of networks 105, 110, 115 and 120 can be merged or incorporated into one another as part of a single network.

In general, a content delivery network includes a plurality of nodes. Each node can have redundant cached copies of content that is to be delivered upon request. The content can be initially retrieved from a media server 195 and subsequently cached at each node according to a caching or retention policy.

CDN nodes can be deployed in multiple geographic locations and connected via one or more data links (e.g., backbones). Each of the nodes can cooperate with each other to satisfy requests for content by clients while optimizing delivery. Typically, this cooperation and delivery process is transparent to clients.

In a CDN, client requests for content can be algorithmically directed to nodes that are optimal in some way. For example, a node that is geographically closest to a client can be selected to deliver content. Other examples of optimization include choosing nodes that are the fewest number of network hops away from the client, or which have the highest current availability.

One or more client devices 190 (e.g., user equipment or subscriber mobile devices) can request media content from media servers 195. In the illustrated embodiments, client devices 190 can be any computing device, comprising a processor and memory, and capable of communication via a network, such as a mobile data network. For example, client devices 190 can be a personal or portable computer, mobile device, personal digital assistant, smart phone, electronic reading device, or portable electronic devices or a combination of these. The client device 190 is generally operable to send or transmit requests for media content.

In various embodiments, the client device 190 includes a requesting client which can be a computing application, application plug-in, a widget, media player or other mobile device application residing or rendered on the device 190 in order to send or transmit one or more requests.

Media server 195 can include one or more servers equipped with a processor and memory storing, for example, a database or file system. Media server 195 can be any server that can provide access to multimedia content, such as video and audio content in a streaming session by, for example, storing the multimedia content. The content can include a wide variety of user-generated content, including movies, movie clips, TV shows, TV clips, music videos, video blogging and short original videos, etc. Examples of media server 195 can include websites such as YouTube™ and Netflix™, etc. Media server 195 can also store a plurality of versions of the same multimedia content, such as, for example, different formats or resolutions of the same multimedia content. For example, a media server can store the same movie clip in two or more video resolutions, such as 480p, 720p, 1080i or 1080p. Likewise, the media server can store the same movie clip in two or more video formats, such as Windows Media Video or Moving Picture Experts Group MPEG-4 Advanced Video Coding (MPEG-4 AVC).

Generally, a media server 195 is operable to commence a media streaming session in response to a request from a client device 190, as described further herein. The request can traverse mobile data network 160 and be relayed to media service gateway 135. Media service gateway 135 can deny the request, modify it, or transmit it further to the respective media server 195 via a router 125, which connects to a suitable network for delivering the request. In some embodiments, router 125 can be incorporated into media service gateway 135, or into one or more of networks 105, 110, 115 or 120.

Media service gateway (MSG) 135 can be a server system equipped with a processor and memory storing, for example, a database or file system. The media service gateway 135 can be a video service gateway (VSG), an audio service gateway, or a combination thereof. Although only one media service gateway 135 is shown for clarity, there can be multiple media service gateways 135 distributed over a wide geographic area and connected via, for example, a data network such as service provider CDN 120. Media service gateway 135 can further include a network interface for connecting to the data networks comprising system 100. In some embodiments, media service gateway 135 can be incorporated into a hardware router 125, as a software module, for example. In addition, system 100 can include a policy and charging control (PCC) server 150, and a subscriber database server 130.

Although the exemplary embodiments are shown primarily in the context of mobile data networks, the described systems and methods are also applicable to other network configurations. For example, the described systems and methods can be applied to data networks using satellite, digital subscriber line (DSL) or data over cable service interface specification (DOCSIS) technology in lieu of, or in addition to a mobile data network.

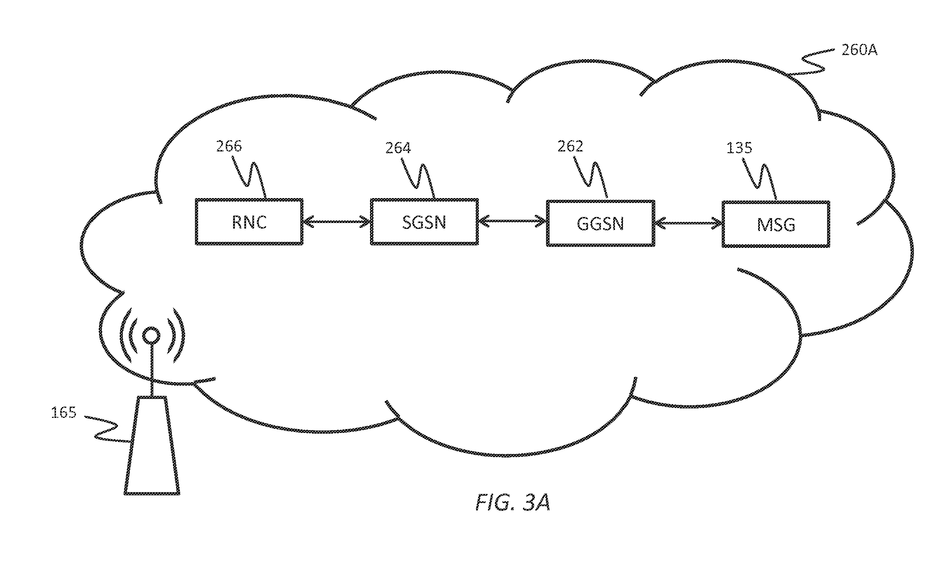

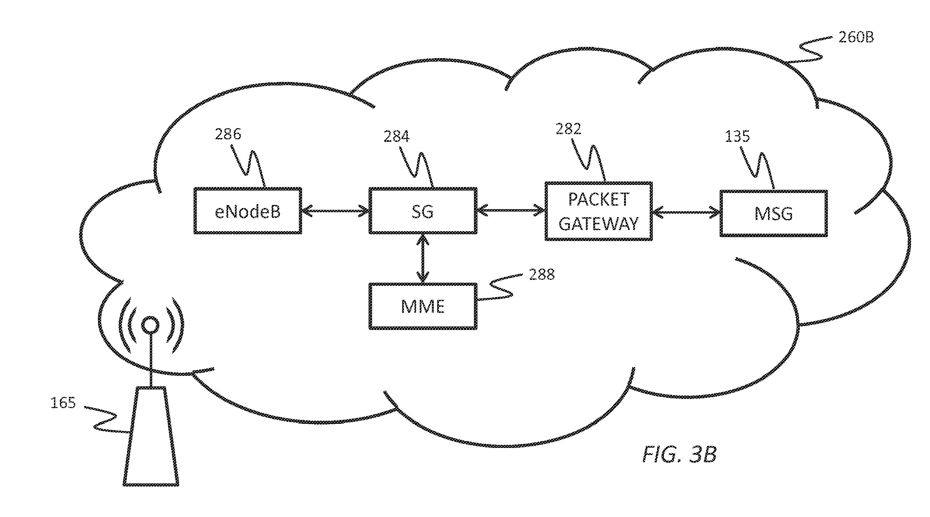

Referring now to FIGS. 3A and 3B, there are shown example implementations of a mobile data network in system 100. FIG. 3A illustrates a mobile data network 260A, which can be a "3G" implementation of mobile data network 160 using a standard such as Universal Mobile Telecommunications System (UMTS).

Mobile data network 260A includes support nodes including a serving GPRS support node (SGSN) 264 (where GPRS stands for General Packet Radio Service) and a gateway GPRS support node (GGSN) 262. Mobile data network 260A further includes a radio network controller (RNC) 266. Various other network elements commonly deployed in a 3G mobile data network are omitted for simplicity and clarity. Each mobile data network 260A can include a plurality of support nodes and radio network controllers.

The media service gateway (MSG) 135 can act as a video service gateway (VSG), an audio service gateway, or a combination thereof. The MSG 135 can identify media streams, request an allotment of media duration associated with a time-denominated quota, permit, block or modify requests for media content from a client device to a media server, optionally modify the media content, and deliver the media content to a requesting subscriber mobile device.

FIG. 3B illustrates a mobile data network 260B, which can be a "4G" implementation of mobile data network 160 using a standard such as 3GPP Long Term Evolution (LTE). Mobile data network 260B is generally analogous to mobile data network 260A, except that network elements with different capabilities can be provided. Mobile data network 260B includes gateways, including a serving gateway 284 and a packet gateway 282. Mobile data network 260B further includes an Evolved Node B (eNodeB) 286 and a mobile management entity (MME) 288. Various other network elements commonly deployed in a 4G mobile data network are omitted for simplicity and clarity. Each mobile data network 260B can include a plurality of gateways, eNodeBs and MMEs.

The media service gateway (MSG) 135 can act as a video service gateway (VSG), an audio service gateway, or a combination thereof. The MSG 135 can identify media streams, request an allotment of media duration associated with a time-denominated quota, request media content from a media server, optionally modify the media content, and deliver the media content to a requesting subscriber mobile device. In particular, aspects of the time-denominated quota management system for managing delivery of streaming media content can be implemented in a media service gateway or other devices in communication with the network.

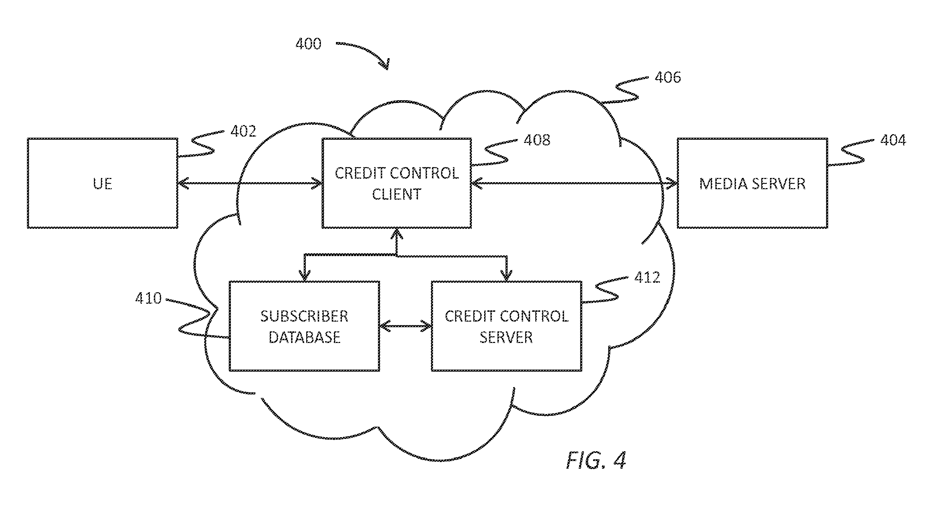

FIG. 4 illustrates an exemplary system 400 in which end-user equipment 402, such as a client device or subscriber mobile device, communicates with a media server 404 through a credit control client 408, which manages the delivery of media content based on availability of time associated with the time-denominated quota. The credit control client 408 can be part of a media service gateway (MSG) or alternatively, can be a separate unit interacting with the MSG.

Within an operator network 406, the credit control client 408 can communicate with a subscriber database 410 and a credit control server 412. While FIG. 4 illustrates specific functional modules, the functionality of such modules can be distributed across one or more computational devices within the operator network 406. In particular, the functional modules within the operator network 406 can exist in a single network node or can operate across multiple network nodes. For example, multiple functions can be implemented in a media service gateway, such as a video service gateway (VSG), audio service gateway, or a combination thereof. In another example, aspects of the system can be implemented in policy control server (e.g. PCRF) or policy enforcement server (e.g. PCEF).

The end-user equipment 402, such as a subscriber device associated with the subscriber account, can include a personal computer (PC), tablet, or smart phone trying to access media content. In an example, the media server 404 can deliver video or audio content across a wide area network or global network. In another example, the media server 404 can deliver audio or video content across a local area network or over an operator network. In an example, the media server 404 delivers audio or video content across a global network, for example, from YouTube™, Netflix™, or Spotify™, among others. User equipment 402 can be connected to the operator network 406 through a wired connection. Alternatively, the user equipment 402 can be connected wirelessly using a wireless data standard, such as EDGE, 3G, 4G, or successor standards.

The operator network 406 can operate under one or more standard communication protocols or their successors. In an example, the operator network 406 can follow standards of the Internet engineering task force (IETF), such as the IETF request for comments (RFC) 4006 - Diameter credit control application. Accordingly, the system can implement a credit control client 408, a subscriber database 410, and a credit control server 412.

The credit control client 408, or credit control point, is an entity capable of identifying media traffic and measuring or estimating the delivery of the media traffic on a time basis. The credit control client 408 can further perform media-specific credit requests, responses, or updates in units of time. Further, the credit control client 408 can perform media-specific enforcement on a time basis. In an example, the credit control client 408 function can be implemented in a media service gateway (MSG), such as a video service gateway (VSG). The MSG can provide an integrated media service element and credit control client. In particular, functioning as a media service element, the MSG can identify, measure, and manage media traffic on a time basis.

The MSG/credit control client may provide multiple time values associated with a media session to the quota management system, which may be referred to collectively as the media duration. The MSG/credit control client may determine these values via direct measurement, estimation or combinations thereof, using network layer data, transport layer data, application layer data, or combinations thereof. Application layer data may include manifest data, container data, feedback data, compressed media bitstream data, or a combination thereof.

Media duration values may be in terms of application or playback time, which may be measured or estimated using media timing information generally present in the application layer. Examples include clip duration (total length of media clip as stored on the media server, in time units), streamed duration (amount of media, in time units, delivered to the client), watched duration (amount of media, in time units, delivered to the client and viewed by the subscriber, e.g. based on a viewing model), or a combination thereof.

Media duration values may also be in terms of network or streaming time, which may be a determination of the time(s) between one or more request or response packets for the media flow or flows. This parameter has the advantage that it may be determined without inspecting application layer data, but may be less accurate. This parameter may be modified based on further attributes such as the measured network bitrate over the network time relative to an expected media bitrate over the network time. Expected media bitrate may be based on further knowledge of the subscriber data plan the media service or other encoding parameters.

A credit control client 408 optionally running on a MSG can perform media specific credit requests, responses, and updates on a time basis. The credit control client 408 can communicate with the credit control server 412 when service is requested, for example, when a media session is started or ended. The credit control client 408 can communicate with the credit control server 412 to verify whether an account balance is sufficient to cover a time-based amount of requested media content. The credit control client 408 can also communicate with the credit control server 412 to implement potential charges (debits or credits) to the subscriber account associated with the requesting user equipment 402. In an example, communication between the credit control client 408 and the credit control server 412 can utilize the Diameter protocol utilizing a credit control request (CCR) or a credit control answer message.

The credit control client 408 or MSG can also optionally perform media specific enforcement on a time basis. For example, the credit control client 408 can deny, permit, or modify media traffic, including media requests, media responses or media data. Such functions can be performed in conjunction with other decision or enforcement points within the operator network 406. For example, in the third generation partnership project (3GPP) policy and charging control (PCC) architecture, such functionality can be performed in conjunction with policy control servers (e.g. PCRFs and PCEFs).

Quota management can be performed in conjunction with additional media specific parameters related to the quality of the media session, both as media content is authored or encoded or as the media content is delivered. Such parameters can be validated or enforced as quality targets or constraints for a given session for a given media service plan. Exemplary parameters include a minimum or maximum number of audio channels, audio sampling rates, or audio bit rates; minimum or maximum video resolution, video frame rate, or video bit rate; minimum or maximum total bit rate; maximum startup delay, frequency, location and duration of stalling events; or minimum or maximum target quality metrics; or a combination thereof. In particular, when quality targets are outside of the defined parameter range (e.g., not between the minimum and maximum) the impact of media duration within a media session can be modified. For example, when video quality represented by one or more metrics is not within a range associated with a particular service plan, the media duration can be augmented to change the value of the media duration that is to be applied against the time-denominated quota. In another example, when a startup delay or a stalling exceeds a constraint, the media duration can be reduced to reduce the impact on the time-denominated quota.

In addition, a credit control client 408 optionally implemented as an MSG can provide quota management enhanced to improve or extend service. For example, during periods of congestion, a MSG can apply proportional traffic management to affected subscribers and consequently de-rate time units debited for media plan subscribers. In another example, a MSG can apply quality improvements (e.g., delivering at a next higher quality of experience (QoE) or resolution) to subscribers with excess quota. In another example, as quota is drawn down, the media plan subscribers can be offered additional quota (time) in exchange for accepting a lower quality level (e.g., lower QoE, resolution, or bit rate, among others). In an additional example, failure to meet a standard level or SLA for a given media session can result in zero rating or crediting the media plan subscriber for the session.

The subscriber database 410 authenticates and authorizes users and provides subscription profile information. In an example, the subscriber database 410 can be analogous to an AAA server in IETF RFC 4006. In 3GPP PCC, the subscriber database 410 can correspond to an HSS/SPR which the MSG can access directly or through a PCRF. In particular, subscription profile information can include ranges of quality metrics associated with the media service plan, information about subscriber devices, initial time-denominated quota, and other policy parameters associated with the subscriber account.

The credit control server 412 can perform credit authorization, real-time rating and credit control. The credit control server 412 communicates with the credit control client 408 when service is requested, e.g., when the media session is started or ended. The communication can occur via the Diameter protocol using credit control request (CCR) or credit control answer (CCA) messages, for example. Alternatively, other standards or communications protocols can be used. The credit control server 412 can maintain a session state for session-based credit control. In a particular example, the credit control server 412 can be analogous to an online charging server (OCS) in 3GPP PCC architecture. Further, interworking with multiple enforcement points in the service provider network can be utilized and accomplished either in-band or out-of-band using messaging or signaling, packet marking or header enhancement, as well as back-end reconciliation of multiple records in accordance with various proprietary or public protocols and standards or their successors.

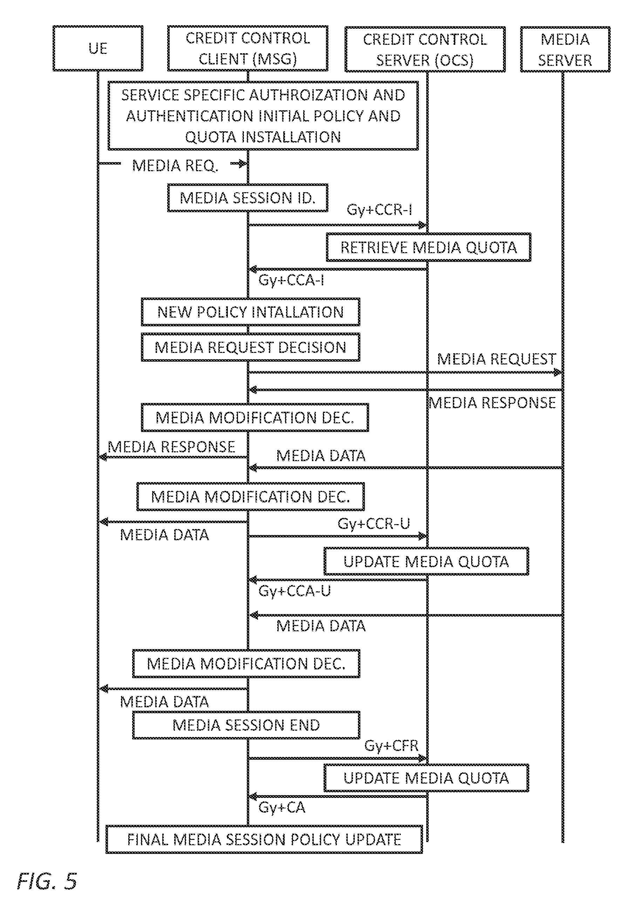

FIG. 5 illustrates an exemplary signaling flow for a connection where a media session is initiated. The message flows can be generally driven by the control point detecting a media session and asking for time units from the server granting units in the control point managed media session. While FIG. 5 identifies specific device types and communications relating to particular protocols, alternative protocols and standards can be used.

Optionally, the credit control client can retrieve policy and media quotas one or more times prior to the receiving a request for media content from user equipment, such as a subscriber mobile device, for example when a subscriber mobile device attaches to the network. Alternatively, the credit control client may not retrieve policy and media quotas prior to receiving a request.

The user equipment can request new media content. The request for media content is detected by the credit control client. In an example, an MSG identifies a request for media content. In practice, identifying a request for media content may utilize waiting for and analyzing some initial portion (e.g. first few bytes) of a media server response to a request. The credit control client can initiate a session to be associated with the request for media content. The credit control client can access quota information from the credit control server. In an example, the credit control client provides a credit control request to the credit control server. The credit control server responds with a credit control answer. For example, the credit control server can verify that the subscriber has enough balance within the time-denominated quota to grant a request from the credit control client for providing the media content. When the subscriber account has insufficient balance, the credit control server can optionally grant fewer time units than requested or reject the request. In a further example, the credit control client can request a portion of time from the credit control server. The credit control server can determine whether the apportionment or allotment of time can be met within the time-denominated quota associated with the subscriber account. The credit control server can then provide permission to the credit control client to provide a media session within the boundaries of the apportioned time.

Optionally, the credit control client can retrieve policy information (new media system policy installation of FIG. 5) from one or more policy servers. In an example, the network operator may offer subscriber accounts having one of several levels of service either denominated in increasing amounts of time or higher quality, or combination thereof. Optionally, non-media data can be treated separately with different policies. Further, the subscriber account can be associated with a particular subscriber device, such as a subscriber mobile device. In an example, policies can be obtained through a policy control server (e.g. PCRF). As such, a subscriber account can have a time-denominated quota and an associated policy or set of parameters indicative of the agreed-upon the quality of service or quality of experience to be delivered to the subscriber device. Accordingly, a media session policy can be associated with the media session implemented upon the request for media content from the subscriber device.

In response to receiving an allotment of time from the credit control server or receiving a rejection of service, the credit control client can decide (media request decision of FIG. 5) whether to provide the media content to the user equipment.

In an example in which the media session can be identified from the request for media content from the user equipment, the credit control client can request the media from a media server, and the media server can respond, indicating availability of the media content. For example, the credit control client and the media server can implement a handshake under one of several protocols. Optionally, the media server can provide metadata indicating the number of audio channels, audio sampling rate, or audio bit rate; video resolution, video frame rate, or video bit rate; total media bit rate; or other parameters associated with the media content.

Based on the media content or the metadata associated with the media content, the credit control client can decide whether to modify the media content (media modification decision of FIG. 5). In particular, based on the associated media session policy, local policy, and allotted portion of the quota, the credit control client can decide whether to deny, permit, or modify a media request. In the example where the media session can only be identified from some initial portion (e.g. first few bytes) of a media server response, the credit control client may not deny the media request. Optionally, the credit control client can provide a media response to the user equipment. When the media content is to be delivered to the user equipment, the credit control client can retrieve, or continue to retrieve, the media content data from the media server. The media content data can be modified based on retrieved policies, local policies, and quota (media modification decision of FIG. 5). In particular, the media content data can be transcoded before sending the media content data to the user equipment.

The credit control client can transcode the media content data based on limitations of the user equipment. In another example, the credit control client can modify audio encoding format, the number of audio channels, audio sampling rate, or audio bit rate; video encoding format, video resolution, video frame rate, or video bit rate; total media bit rate; or other quality of the media content data based on the policy associated with the subscriber account, the amount of traffic on the network, limitations associated with the time-denominated quota, or in response to offers made to the subscriber to accept a lower quality content in exchange for extended quota. As such, the credit control client can deliver the modified content from the media server to the user equipment based on the policies and the allotted quota.

Optionally, before the media session has used the granted time-denominated units, the credit control client sends an update to the credit control server indicating the number of time-denominated units that have been used. In particular, based on the media content data delivered to the user equipment, the credit control client can determine a media duration and provide the media duration to the credit control server. In an example, the media duration can be modified based on the quality of content delivered to the user equipment. For example, media duration associated with lower quality media content data can be modified with a multiplier less than 1.0 to reduce the impact on the time-denominated quota. In another example, the media duration can be modified in response to startup delays or stalling events or other quality of experience factors. Further, the media duration can be modified based on a model of the player or application associated with the user equipment. When media duration approaches the allotted portion of the time-denominated quota provided to the credit control client from the credit control server, the credit control client can request additional quota from the credit control server and optionally provide the modified media duration to the credit control server. Alternatively, the credit control server can determine how to modify the media duration based on the media quality and other factors.

In response to a request from the credit control client for additional allotments of time, the credit control server can update the time-denominated quota (update quota of FIG. 5) and, when additional time is available, can provide an additional allotment of time-denominated units to the credit control client. The process of requesting additional time, updating the time-denominated quota, and optionally providing an additional allotment of time can be repeated depending upon the length of the streaming media content and the amount of time-denominated quota available to the subscriber account. Optionally, as the quota is exhausted, a prompt can be sent through the credit control client to the end user equipment notifying the end user that the time-denominated quote is exhausted and offering the end-user the option to purchase additional time-denominated quota.

The frequency of the request and response exchanges can be configurable. As there are many concurrent media sessions, the frequency can balance server load and client needs, and can be limited, optimized, or minimized by the credit control client to limit server load.

In response to receiving additional quota, the credit control client retrieves additional media content data, optionally modifies the media content data (media modification decision of FIG. 5), and provides the media content data to the user equipment. When the media content data is delivered or when the user terminates viewing of the content, the credit control client can end the media session (media session end of FIG. 5), determine the media duration and optionally modified media duration based on quality levels and metrics or policies, and provide a final report to the credit control server. In particular, the final credit report for the media session can include stream duration and quality, watch duration or quality, or quality parameters (e.g., quality of experience, resolution, display device, bit rate, etc.). The credit control server can update the time-denominated quota and provided acknowledgement to the credit control client. Optionally, a final media session policy update can be implemented (final media session policy update of FIG. 5), for example, based on interactions with the user through the user equipment. The server can clear any related reservations made in the back-end balance management system. If this subscriber did not terminate the session but instead depleted the time-denominated balance, the server may have responded earlier with a rejection or an update message, possibly instructing the control point to redirect traffic.

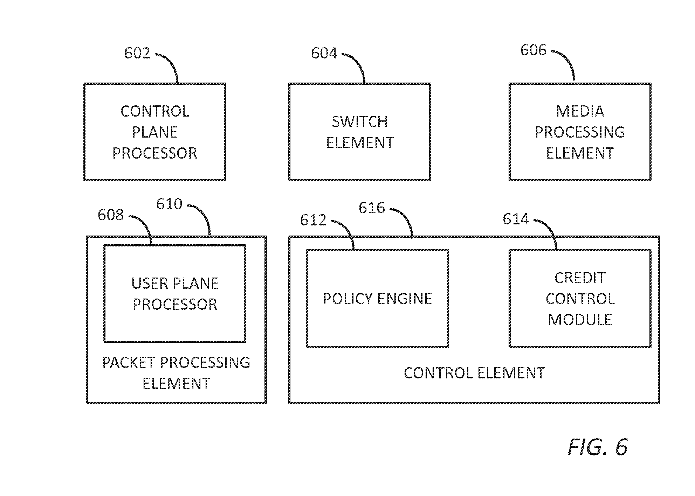

As indicated, the credit control client can be implemented in an MSG, such as a VSG. FIG. 6 illustrates a simplified block diagram of a MSG operable to measure and manage media services like time-denominated quota. The time-denominated quota measures the quantity of media content that can be consumed using time-based units. For example, a ten-hour video quota may allow a user to watch five or six (depending on the length) feature-length films. Thus, the MSG can combine the functions of a media service element and a media specific credit control client.

The MSG can be configured to route any generic network data traffic for client devices, such as user equipment, to and from a network, and the Internet. The MSG can identify media sessions in generic network data traffic, and permit selective media session-based policy execution and traffic management of in-progress communication sessions ("flows"). As such, media sessions can be controlled based on media related policies and optionally, non-media data can be controlled based on other policies. Such functionality is a significant enhancement over conventional per-flow or per-subscriber application of policies, in which policies are applied to individual flows (on a per-packet or per-flow basis) or applied to all data for a particular subscriber (per-subscriber).

Based on the service provider's policy rules, the MSG can be configured to determine and enforce media session-based policies to manage user's media traffic to a time-based quota, optionally using quality levels or metrics. Determinations and enforcement can be performed by working in a closed-loop mode, using continuous real-time feedback to optimize or tune individual media sessions.

The MSG can perform a number of functions conventionally implemented via separate interconnected physical appliances. Implementation in an integrated architecture, which supports a wide range of processor options, is beneficial to reduce cost while improving performance and reliability. Accordingly, the MSG can have one or more switch elements 604, one or more media processing elements 606, one or more packet processing elements 610, one or more control elements 616, or one or more control plane processors 602, optionally in an integrated platform. In some embodiments, the function of one or more of switch elements 604, media processing elements 606, packet processing elements 610, control elements 616, or control plane processors 602 can be integrated, such that a subset of the elements implements the entire functionality of MSG as described herein. In some embodiments, one or more of the elements can be implemented as a server "blade", which can be coupled together via a backplane. Each of the elements can include one or more processors and memories.

Switch elements 604 can be configured to perform control or user plane traffic load balancing across packet processing elements. Switch elements 604 can also be configured to operate the MSG in one or more of a number of intersection modes. The intersection modes can permit passive monitoring of traffic (supporting measuring and reporting media traffic against a time-based quota, but optionally not enforcing) or permit active management of traffic (supporting measuring, reporting and enforcing).

Media processing elements 606 can be configured to perform inline, real-time, audio and video transcoding of selected media sessions. Media processing elements 606 can generally perform bit rate reduction. In some cases, the media processing element 606 can perform sampling rate reduction (e.g., spatial resolution or frame rate reduction for video, reducing sample frequency or number of channels for audio). In some cases, the media processing element 606 can perform format conversion for improved compression efficiency, whereby the output media stream being encoded can be converted to different more efficient format than that of the input media stream being decoded (e.g. H.264/AVC vs MPEG-4 part 2).

The control element 616 can generally perform system management and (optionally centralized) application functions. System management functions can include configuration and command line interfacing, Simple Network Monitoring Protocol (SNMP) alarms and traps and middleware services to support software upgrades, file system management, or system management functions.

The control element 616 can include a policy engine 612, acting as a Local Policy Decision Point (LPDP). The policies available at the MSG can be dynamically changed by a network operator. In some cases, the policy engine 612 of the control element 616 can access policies located elsewhere on a network. For example, the policy engine 612 can be implemented as part of the 3GPP PCC ecosystem.

The policy engine 612 can maintain and evaluate a set of locally configured node-level policies, including media session policies, and other configuration settings, that are evaluated by a rules engine in order to perform active management of subscribers, locations, and media sessions. Media sessions can be subject to global constraints and affected by dynamic policies triggered during session lifetime. Accordingly, policy engine 612 can keep track of live media session metrics and network traffic measurements. Policy engine 612 can use this information to make policy decisions both when each media session starts and throughout the lifetime of the media session, as the policy engine 612 can adjust polices in the middle of a media session due to changes, e.g. in network conditions, changes in business objectives, time-of-day, etc..

The policy engine 612 can utilize device data relating to the identified client device, which can be used to determine device capabilities (e.g., screen resolution, codec support, etc.). The device database can include a database such as Wireless Universal Resource File (WURFL) or User Agent Profile (UAProf).

The policy engine 612 can also access and use subscriber information. In some cases, subscriber information can be based on subscriber database data obtained from one or more external subscriber databases. Subscriber database data can include quotas and policies specific to a user or a subscription tier. The subscriber database can be accessed via protocols, such as Diameter, Lightweight Directory Access Protocol (LDAP), web services or other proprietary protocols. Subscriber database data can be enhanced with subscriber information available to the system, such as a usage pattern associated with the subscriber, types of multimedia contents requested by the subscriber in the past, the current multimedia content requested by the subscriber, or time of the day the request is made and location of the subscriber making the current request, among other data.

Media session policies include access control, re-multiplexing, request-response modification, client-aware buffer-shaping, transcoding, adaptive streaming control, in addition to the more conventional per-flow actions such as marking, policing/shaping, etc. Media session policy actions can be further scoped or constrained by one or more individual or aggregate media session characteristics, such as: subscriber (IMEI, IMSI, MSISDN, IP address), subscriber tier, roaming status; transport protocol, application protocol, streaming protocol; container type, container meta-data (clip size, clip duration); video attributes (codec, profile, resolution, frame rate, bit rate); audio attributes (codec, channels, sampling rate, bit rate); device type, device model, device operating system, player capabilities; network location, APN, location capacity (sessions, media bandwidth, delivered bandwidth, congested status); traffic originating from a particular media site or service, genre (sports, advertising); time of day; or QoE metric; or a combination thereof.

The control element 616 can also include a credit control module 614 which acts as a credit control client and interacts with a credit control server, such as, e.g. a charging system. In particular, the credit control client can access and update quota information from the credit control server in time-denominated units, using one or more of the media duration parameters as defined herein. Thus, the VSG can monitor and manage usage of media service under direction of a charging server/charging system.

Packet processing element 610 can be generally configured to analyze user plane traffic across all layers of the TCP/IP (or UDP/IP, or other equivalent) networking stack and identify media sessions via a user plane processor 608. The packet processing element 610 can be configured to re-enqueue packets that do not utilize advanced processing "back to the wire" with very low latency. Packets that are to utilize additional processing can be forwarded internally for deeper processing.

Deeper processing can include parsing of the transport, application and container layers of received/sent user plane packets, and execution of policy based on subscriber, device, location/network state or media session analysis and processing, for example. Packet processing element 610 can include processing on application layer content such as HTTP, RTSP, RTMP, or the like. Packet processing element 610 can include processing on container layer content such as MP4, FLV, HLS, or the like. The packet processing element 610 can forward general data traffic information and specifically media session information, e.g. bit rates, TCP throughput, RTT, etc., to other elements.

Analysis can include generating statistics and QoE measurements for media sessions, providing estimates of bandwidth required to serve a client request and media stream at a given QoE. Packet processing element can make these values available as necessary within the system. Examples of statistics that can be generated include, e.g., bandwidth, site, device, video codec, resolution, bit rate, frame rate, clip duration, streamed duration, audio codec, channels, bit rate, sampling rate, or the like. QoE measurements computed can include, e.g., delivery QoE, presentation QoE, and combined QoE.

In some cases, the control plane processor 602 can be configured to process control plane messages to extract subscriber identity or device identity information, and to map the devices (e.g., physical or geographic location). The control plane processor 602 can forward the identity and location information to other elements.

For example, in mobile networks using 3GPP GRPS/UMTS, LTE, or similar standards, subscriber and mobile device identity information, location, as well as other mobility parameters can be gathered for subscriber, device, and location-based traffic management and reporting purposes. Such gathering can be accomplished in part by inspecting control plane messages exchanged between gateways, for example GTP-C (GPRS Tunneling Protocol Control) over the Gn interface, GTPv2 over the S4/S11 or S5/S8 interfaces, or the like, or by receiving mobility information from other network nodes, such as the RNC, Mobile Management Entity (MME) or the like.

A media session can generally be considered to have been identified once sufficient traffic relating to that media session has been observed at the application layer. In some cases, a media session can be identified from the initial request for media content. In other cases, a media session can be identified after receiving and analyzing some initial portion (e.g. first few bytes) of one a media server response to a request. The amount of input that can be buffered in duration or size can be a limiting factor on how soon a decision is made and whether or not certain policies can be applied. A session identification timer can be used to enforce an upper bound on latency for session identification. After identifying the application payload, the payload can be parsed to find the media content, if any. For example, such identification can be accomplished by dividing the communication into independent interactions, which can correspond to individual request/response pairs. Each interaction is evaluated to determine if the content is streaming media. If the interaction contains streaming media, it is further analyzed to extract media characteristics. Those interactions sharing common media characteristics can be encapsulated into streams. A media session can include a collection of one or more streams.

It will be appreciated that numerous specific details are set forth in order to provide a thorough understanding of the exemplary embodiments described herein. However, it will be understood by those of ordinary skill in the art that the embodiments described herein may be practiced without these specific details. In other instances, well-known methods, procedures and components have not been described in detail so as not to obscure the embodiments described herein. Furthermore, this description is not to be considered as limiting the scope of the embodiments described herein in any way, but rather as merely describing implementation of the various embodiments described herein.

The embodiments of the systems and methods described herein may be implemented in hardware or software, or a combination of both. These embodiments may be implemented in computer programs executing on programmable computers, each computer including at least one processor, a data storage system (including volatile memory or non-volatile memory or other data storage elements or a combination thereof), and at least one communication interface. For example, and without limitation, the various programmable computers may be a server, network appliance, set-top box, embedded device, computer expansion module, personal computer, laptop, personal data assistant, cellular telephone, smartphone device, UMPC tablets and wireless hypermedia device or any other computing device capable of being configured to carry out the methods described herein.

Program code is applied to input data to perform the functions described herein and to generate output information. The output information is applied to one or more output devices, in known fashion. In some embodiments, the communication interface may be a network communication interface. In embodiments in which elements of the invention are combined, the communication interface may be a software communication interface, such as those for inter-process communication (IPC). In still other embodiments, there may be a combination of communication interfaces implemented as hardware, software, or a combination thereof.

Each program may be implemented in a high level procedural or object oriented programming or scripting language, or both, to communicate with a computer system. However, alternatively the programs may be implemented in assembly or machine language, if desired. The language may be a compiled or interpreted language. Each such computer program may be stored on a non-transitory storage media or a device (e.g. ROM, magnetic disk, optical disc), readable by a general or special purpose programmable computer, for configuring and operating the computer when the storage media or device is read by the computer to perform the procedures described herein. Embodiments of the system may also be considered to be implemented as a non-transitory computer-readable storage medium, configured with a computer program, where the storage medium so configured causes a computer to operate in a specific and predefined manner to perform the functions described herein.

Furthermore, the systems and methods of the described embodiments are capable of being distributed in a computer program product including a physical, non-transitory computer readable medium that bears computer usable instructions for one or more processors. The medium may be provided in various forms, including one or more diskettes, compact disks, tapes, chips, magnetic and electronic storage media, or the like. The computer useable instructions may also be in various forms, including compiled and non-compiled code.

The described embodiments may generally provide systems and methods to control access to a multimedia stream in a streaming session to manage multimedia traffic in wired and wireless communication networks and to perform traffic optimization. Traffic optimization is an ongoing process that includes a configurable set policy rules defined by a policy language that express operator preferences, goals to achieve, and constraints to operate within; a continuous feedback loop that monitors individuals and overall QoE, bandwidth availability, and congestion status; access control (initial resource selection) based on device capabilities, hardware resource availability, local policies, and congestion status; or the ongoing tuning of individual media session using such real-time collected metrics.

The embodiments described herein may be used in conjunction with systems and methods for providing congestion estimation in a communications network, which can be found, for example, in copending U.S. Application No. 13/053,565, the entire content of which is hereby incorporated by reference. The embodiments described herein may also be used in conjunction with systems and methods for estimating Quality of Experience (QoE) of media streams, which can be found, for example, in copending U.S. Application No. 13/053,650, the entire content of which is hereby incorporated by reference.

Quality of Experience may be defined as how a user perceives a service when in use. QoE may be measured subjectively or modeled. If modeled, the model may generate a score which is an estimate of a subjective score. In the case of automated QoE measurement, a device may implement one or more models which generate QoE scores for media sessions identified in network traffic.

QoE scores may reflect the impact of one or more of the delivery network, source content, and display device on the user experience during a media session. Network effects may manifest as temporal artifacts such as startup delay, stalling, unexpected stream switching, etc. Content effects may manifest as spatial artifacts in the content such as blurring, blocking, noise, etc. Device effects generally include display size.

Network operators and multimedia content providers and distributors are limited in their ability to control access of multimedia streams by subscribers or users, which can result in bandwidth shortages and degraded user experiences.

The described methods and systems can take into account subscriber information, network layer information, transport layer information, application layer information (including manifest data, container data, feedback data, compressed media bitstream data), container layer information, elementary stream information, device information, network location and status information, media site/service information, time of day, QoE information, or a combination thereof. In some cases, the described methods and systems may operate within a Policy and Charging Control (PCC) architecture and the Policy and Charging Enforcement Function/Application Function (PRCF/AF) role.

The above described systems and methods can provide technical advantages such as allowing networks to measure and manage streaming content (e.g., video or audio content) quality in real time and to charge for such streaming content traffic per minute, rather than per megabyte. Advantageously, such systems and methods simplify the usage, consumption and purchase of streaming media services, while providing a revenue stream for network operators. Separating video or audio content from data traffic can assist network operators in determining streaming content average revenue per user (ARPU).

In a first aspect, a method of providing streaming media content to a subscriber mobile device includes providing a time-denominated media quota associated with the subscriber mobile device; in response to a request for media content from the subscriber mobile device, providing the streaming media content to the subscriber mobile device through a mobile data network; determining a media duration associated with the streaming media content; and applying the media duration associated with the streaming media content to the time-denominated media quota.

In an example of the first aspect, the streaming media content includes video content. In another example of the first aspect, the streaming media content includes audio content.

In a further example of the first aspect and the above examples, determining the media duration includes determining the media duration based on a duration of streaming media content provided. For example, determining the media duration further includes determining the experienced content based on aspects of the subscriber mobile device. In another example, determining the media duration further includes determining the experienced content based on aspects of an application on the subscriber mobile device requesting the streaming media content. In an additional example, determining the media duration includes determining the media duration based on inspecting payload data of the streaming media content. In a further example, determining the media duration include determining the media duration based on a time difference between two or more request or response packets associated with the streaming media content. In an additional example, determining the media duration includes determining the media duration based on application or playback time of the media content. For example, the application or playback time of the media content is determined from application layer information. In another example, determining the media duration further includes determining the media duration based on network or streaming time using information from the transport and network layer. For example, the network or streaming time is determined from network or transport layer information modified based on a measured network bitrate over the network time relative to an expected media bitrate over the network time.

In an additional example of the first aspect and the above examples, determining the media duration includes adjusting the media duration based on parameters associated with the streaming media content provided. In an example, determining the media duration includes adjusting the media duration based on quality parameters associated with the streaming media content provided. For example, the parameters are selected from the group consisting of number of audio channels, audio sampling rate, or audio bit rate; video resolution, video frame rate, or video bit rate; total media bit rate, start-up delays or frequency, location and duration of stalling events; or other quality metrics, or a combination thereof.

In another example of the first aspect and the above examples, providing the streaming media content can include modifying the streaming media content.

In a second aspect, a system for managing delivery of streaming media includes a credit control client to receive a request for media content from a subscriber mobile device and to deliver the media content to the subscriber mobile device based on an availability of media time associated with a time-denominated quota. The system further includes a subscriber database in communication with the credit control client and to provide data to the credit control client associating a subscriber account with the subscriber mobile device. The system also includes a credit control server in communication with the credit control client and the subscriber database, the credit control server to communicate the availability of media time based on the time-denominated quota associated with the subscriber account associated with the subscriber mobile device and to apply a media duration associated with the delivered media content to the time-denominated quota.

In an example of the second aspect, the credit control client, the subscriber database, and the credit control server communicate through an operator network. For example, the system can further include a mobile data network associated with the operator network.

In another example of the second aspect and the above examples, the system further includes a media server to deliver the media content to the credit control client.

In a further example of the second aspect and the above examples, the credit control client is to modify the media content based on a policy associated with the media session, client device, subscriber, location/network state, or a combination thereof. For example, the credit control client is to adjust the media duration and to communicate the adjusted media duration to the credit control server. In a further example of the second aspect and the above examples, to modify the media content includes to transcode the media content. For example, to transcode the media content includes transcoding to a lower quality media content based on traffic within a mobile data network.

In an additional example of the second aspect and the above examples, the credit control client is to adjust the media duration and to communicate the adjusted media duration to the credit control server. For example, the credit control client is to adjust the media duration based on a quality of the delivered media content. In another example, the credit control client is to adjust the media duration based on a viewing model of the subscriber mobile device. In an additional example, the credit control client is to modify the media content based on a policy associated with the subscriber mobile device. In an example, the quality is determined based on the audio encoding format, number of audio channels, audio sampling rates, or audio bit rates; video encoding format video resolutions, video frame rates, or video bit rates; total media bit rate; startup delays or frequency, location and duration of stalling events; or other quality metrics.

In a third aspect, a method for managing streaming media includes receiving a request for media content from a subscriber mobile device via a mobile data network; determining an availability of media time relative to a time-denominated quota associated with the subscriber mobile device; providing a media content stream to the subscriber mobile device based on the availability of the media time; and determining a media duration associated with the media content stream provided to the subscriber mobile device.

In an example of the third aspect, the media content stream includes video content. In another example of the third aspect, the media content stream includes audio content.

In a further example of the third aspect and the above examples, the method further includes applying the media duration to the time-denominated quota. For example, applying the media duration to the time-denominated quota includes communicating with a credit control server.

In an additional example of the third aspect and the above examples, determining the availability of media time includes communicating with a credit control server, the credit control server managing the time-denominated quota. For example, communicating with the credit control server includes requesting an apportionment of media time. In an example, requesting the apportionment of media time is based on the expected length of the media content stream. In another example, the method further includes returning an unused portion of the apportionment of media time to the credit control server. In an additional example, the method further includes requesting an additional apportionment of media time.

In another example of the third aspect and the above examples, determining the media duration includes adjusting a deliver time associated with the provided media content stream based on the subscriber mobile device.

In a further example of the third aspect and the above examples, determining the media duration includes adjusting based on a metric associated with the media content stream. For example, the metric is audio encoding format, number of audio channels, audio sampling rate, or audio bit rate; video encoding format, video resolution, video frame rate, or video bit rate; total media bit rate; startup delays or frequency location and duration of stalling events; or other quality metrics, e.g. presentation, delivery, or combined quality of experience metrics, or a combination thereof.

In another example of the third aspect and the above examples, the method further includes modifying the media content stream prior to providing the media content stream to the subscriber mobile device. For example, modifying includes transcoding the media content stream to a lower quality. In an example, the method further includes prompting a user at the subscriber mobile device to accept the lower quality media content stream in exchange for additional time-denominated quota.

In a fourth aspect, a method of managing streaming media usage includes allotting a time-denominated media quota to a mobile subscriber account; receiving a request for media time associated with a subscriber mobile device associated with the mobile subscriber account; and approving the request based upon the availability of media time relative to the time-denominated media quota.

In an example of the fourth aspect, the method further includes denying the request when the requested media time exceeds media time available relative to the time-denominated media quota.

In another example of the fourth aspect and the above examples, the method further includes providing a reduced amount of media time in response to the request based on media time available relative to the time-denominated quota. For example, the method further includes receiving a media duration associated with the mobile subscriber account; and applying the media duration to the time-denominated media quota. In an example, the method further includes modifying the media duration based on a metric associated with delivered media content. In an additional example, the method further includes modifying the media duration based on the subscriber mobile device.

Note that not all of the activities described above in the general description or the examples are required, that a portion of a specific activity may not be required, and that one or more further activities may be performed in addition to those described. Still further, the order in which activities are listed are not necessarily the order in which they are performed.

In the foregoing specification, the concepts have been described with reference to specific embodiments. However, one of ordinary skill in the art appreciates that various modifications and changes can be made without departing from the scope of the invention as set forth in the claims below. Features of embodiments can be interchangeable with features of other embodiments. Accordingly, the specification and figures are to be regarded in an illustrative rather than a restrictive sense, and all such modifications are intended to be included within the scope of invention.

As used herein, the terms "comprises," "comprising," "includes," "including," "has," "having" or any other variation thereof, are intended to cover a non-exclusive inclusion. For example, a process, method, article, or apparatus that comprises a list of features is not necessarily limited only to those features but may include other features not expressly listed or inherent to such process, method, article, or apparatus. Further, unless expressly stated to the contrary, "or" refers to an inclusive-or and not to an exclusive-or. For example, a condition A or B is satisfied by any one of the following: A is true (or present) and B is false (or not present), A is false (or not present) and B is true (or present), and both A and B are true (or present).

Also, the use of "a" or "an" are employed to describe elements and components described herein. This is done merely for convenience and to give a general sense of the scope of the invention. This description should be read to include one or at least one and the singular also includes the plural unless it is obvious that it is meant otherwise.

Benefits, other advantages, and solutions to problems have been described above with regard to specific embodiments. However, the benefits, advantages, solutions to problems, and any feature(s) that may cause any benefit, advantage, or solution to occur or become more pronounced are not to be construed as a critical, required, or essential feature of any or all the claims.

After reading the specification, skilled artisans will appreciate that certain features are, for clarity, described herein in the context of separate embodiments, may also be provided in combination in a single embodiment. Conversely, various features that are, for brevity, described in the context of a single embodiment, may also be provided separately or in any subcombination. Further, references to values stated in ranges include each and every value within that range.

## Claims

1. A method of providing streaming media content to a subscriber mobile device, the method comprising:
providing a time-denominated media quota associated with the subscriber mobile device;
in response to a request for the streaming media content from the subscriber mobile device, providing the streaming media content to the subscriber mobile device through a mobile data network;
determining a media duration associated with the streaming media content; and
applying the media duration associated with the streaming media content to the time-denominated media quota.

2. The method of claim 1, wherein determining the media duration includes determining the media duration based on application or playback time of the media content.

3. The method of claim 2, wherein the application or playback time of the media content is determined from application layer information.

4. The method of claim 1, 2 or 3wherein determining the media duration further includes determining the media duration based on network or streaming time using information from the transport and network layer.

5. The method of claim 4, wherein the network or streaming time is determined from network or transport layer information modified based on a measured network bitrate over the network time relative to an expected media bitrate over the network time.

6. The method of any preceding claim, wherein determining the media duration includes adjusting the media duration based on quality parameters associated with the streaming media content provided.

7. The method of claim 6, wherein the quality parameters are selected from the group consisting of number of audio channels, audio sampling rates, or audio bit rates; video resolutions, video frame rates, or video bit rates; total media bit rate; start-up delays or frequency, location and duration of stalling events; other quality metrics; and a combination thereof.

8. A system for managing delivery of streaming media, the system comprising:
a credit control client to receive a request for media content from a subscriber mobile device and to deliver the media content to the subscriber mobile device based on an availability of media time associated with a time-denominated quota;
a subscriber database in communication with the credit control client and to provide data to the credit control client associating a subscriber account with the subscriber mobile device; and
a credit control server in communication with the credit control client and the subscriber database, the credit control server to communicate the availability of media time based on the time-denominated quota associated with the subscriber account associated with the subscriber mobile device and to apply a media duration associated with the delivered modified media content to the time-denominated quota.

9. The system of claim 8, wherein the credit control client, the subscriber database, and the credit control server communicate through an operator network.

10. The system of claim 8 or 9, further comprising a media server to deliver the media content to the credit control client.

11. The system of claim 8, 9 or 10, wherein the credit control client is to adjust the media duration and to communicate the adjusted media duration to the credit control server.

12. The system of any of claims 8 to 11, wherein the credit control client is to adjust the media duration based on a quality of the delivered media content.

13. The system of any of claims 8 to 12, wherein the credit control client is to adjust the media duration based on a viewing model of the subscriber mobile device.

14. The system of any of claims 8 to 13, wherein the credit control client is to modify the media content based on a policy associated with the subscriber mobile device, the subscriber, location, the network state, or the media session itself.
